(19) Europäisches Patentamt
European Patent Office
Office européen des brevets

(11) **EP 4 528 844 A2**

(12) **EUROPEAN PATENT APPLICATION**

(43) Date of publication:
26.03.2025 Bulletin 2025/13

(21) Application number: 24186789.4

(22) Date of filing: 05.07.2024

(51) International Patent Classification (IPC):
$H01M\ 4/131^{(2010.01)}$    $H01M\ 4/525^{(2010.01)}$
$H01M\ 4/02^{(2006.01)}$    $C01G\ 53/00^{(2025.01)}$

(52) Cooperative Patent Classification (CPC):
H01M 4/525; C01G 53/50; C01G 53/82;
H01M 4/131; C01P 2002/52; C01P 2002/72;
C01P 2004/61; H01M 2004/021; Y02E 60/10

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.09.2023 CN 202311214137

(71) Applicant: CALB Group Co., Ltd.
Changzhou City, Jiangsu Province (CN)

(72) Inventors:
• ZONG, Fengyi
Changzhou City, Jiangsu Province (CN)
• CUI, Kui
Changzhou City, Jiangsu Province (CN)

(74) Representative: Becker, Eberhard
Becker Kurig & Partner
Patentanwälte mbB
Bavariastraße 7
80336 München (DE)

(54) **POSITIVE ELECTRODE SHEET, ELECTROCHEMICAL DEVICE INCLUDING THE POSITIVE ELECTRODE SHEET, AND ELECTRONIC DEVICE**

(57) The present invention discloses a positive electrode sheet, an electrochemical device including the positive electrode sheet, and an electronic device. The positive electrode sheet of the present invention includes a positive electrode current collector and a positive electrode active material layer, wherein the positive electrode active material layer includes a positive electrode active material, and the positive electrode active material includes a ternary positive electrode material containing boron, zirconium and aluminum; the positive electrode sheet satisfies an equation as follows: $11.0 \leq [F_{101} + (D_{FW}/4.5)] \times 1.85 + \ln(M) \leq 17.0$; where $F_{101}$ is a half-peak breadth of a diffraction peak of the positive electrode active material at a position of $36.6 \pm 1°$ in an XRD spectrum; $D_{FW}$ is a full width at half maximum of particle size volume distribution of the positive electrode active material; and M is a total mass proportion of the trace elements in the positive electrode active material.

EP 4 528 844 A2

## Description

## BACKGROUND

Technical Field

The present invention relates to the field of electrochemical technology, and in particular to a positive electrode sheet, an electrochemical device including the positive electrode sheet, and an electronic device.

Description of Related Art

With the rapid development of modern science and technology, the wide application of small/miniature electronic products and communication tools put forward higher requirements for battery performance. As a new generation of green rechargeable batteries, lithium ion batteries have attracted more and more attention due to their high specific energy, high operating voltage, long cycle life, low self-discharge rate and excellent safety performance, which are widely used in mobile phones, portable computers, video cameras and cameras, and gradually replace the status of traditional batteries in the fields of aviation and navigation, medical instruments and military communication equipment.

However, with the expansion of the application field of lithium ion batteries, the demand for their performance is also increasing. Among them, the cycle performance at high temperature is one of the challenges faced by modern electronic products. In a high-temperature environment, the positive electrode material of the battery may undergo thermal expansion of the lattice structure, resulting in a decrease in the capacity of the battery and an increase in the internal resistance.

Currently, common commercial lithium ion positive electrode materials include lithium iron phosphate, lithium cobaltate, nickel-cobalt-manganese ternary materials, etc. Although the theoretical capacity of various positive electrode materials is not small, as the cut-off voltage is 4.2 V or lower, increasing the discharge cut-off voltage increases the energy density and it also faces the problems of rapid capacity decay and excessive increase in internal resistance.

Nickel cobalt manganate lithium oxide ternary positive electrode materials (NCM), especially high nickel ternary positive electrode materials, which have high capacity and excellent energy density, are widely used as positive electrode materials in lithium ion batteries. However, the stability of high nickel ternary positive electrode materials limits their commercial application.

Therefore, there is a need to develop a positive electrode sheet having better cycle performance under high temperature and high voltage conditions.

## SUMMARY

An object of the present invention is to overcome the disadvantages of the prior art and to provide a positive electrode sheet, an electrochemical device including the positive electrode sheet, and an electronic device. It can significantly improve the internal resistance growth rate and capacity retention rate of the electrochemical device after high-temperature and high-voltage cycling after the positive electrode sheet is applied to the electrochemical device.

In order to achieve the above-mentioned object, in a first aspect of the present invention, the present invention provides a positive electrode sheet including a positive electrode current collector and a positive electrode active material layer provided on at least one surface of the positive electrode current collector, the positive electrode active material layer includes a positive electrode active material, the positive electrode active material includes a ternary positive electrode material containing trace elements, and the trace elements are boron, zirconium and aluminum;

the positive electrode sheet satisfies an equation of:

$$11.0 \leq [F_{101} + (D_{FW}/4.5)] \times 1.85 + \ln(M) \leq 17.0;$$

in the equation, the $F_{101}$ is a half-peak breadth, in the unit of °, of a diffraction peak at a position where a diffraction angle $2\theta$ is $36.6 \pm 1°$ in an XRD spectrum of the positive electrode active material;

$D_{FW}$ is a full width at half maximum, in the unit of $\mu m$, of particle size volume distribution of the positive electrode active material; and

M is a total mass proportion, in the unit of ppm, of the trace elements in the positive electrode active material.

As a preferred embodiment of the present invention, the positive electrode sheet satisfies an equation of $13.0 \leq [F_{101} + (D_{FW}/4.5)] \times 1.85 + \ln(M) \leq 16.0$.

As an alternative embodiment of the present invention, the range of $F_{101}$ is from 0.2° to 1.6°.

As an alternative embodiment of the present invention, the range of $F_{101}$ is from 0.8° to 1.35°.

As an alternative embodiment of the present invention, the range of $D_{FW}$ is from 4 $\mu$m to 15 $\mu$m.

As an alternative embodiment of the present invention, the range of $D_{FW}$ is from 8 $\mu$m to 13 $\mu$m.

As an alternative embodiment of the present invention, the range of M is from 2,500 ppm to 7,000 ppm.

As an alternative embodiment of the present invention, the range of M is from 2,800 to 5,000 ppm.

As an alternative embodiment of the present invention, the contents of B, Al and Zr in the trace elements satisfy an equation of $-20 \leq (3 \times M_B + 1.3 \times M_{Zr} - 2 \times M_{Al})/100 \leq 30$;

in the equation, $M_B$, $M_{Zr}$ and $M_{Al}$ are mass proportions, in the unit of ppm, of boron, zirconium and aluminum in the positive electrode active material, respectively.

As an alternative embodiment of the present invention, the contents of B, Al and Zr in the trace elements satisfy an equation of $-8 \leq (3 \times M_B + 1.3 \times M_{Zr} - 2 \times M_{Al})/100 \leq 15$.

As an alternative embodiment of the present invention, the mass proportion of the B in the positive electrode active material is 300-1,000 ppm.

As an alternative embodiment of the present invention, the mass proportion of the Zr in the positive electrode active material is 1,000-3,000 ppm.

As an alternative embodiment of the present invention, the mass proportion of the Al in the positive electrode active material is 1,000-4,000 ppm.

As an alternative embodiment of the present invention, the ternary positive electrode material has the formula of $LiNi_xCo_yMn_{(1-x-y)}O_2$, where $0.7 \leq x < 1$, $0 < y \leq 0.3$, and $0 < x + y < 1$.

In a second aspect, the present invention provides an electrochemical device including the positive electrode sheet as described above.

In a third aspect, the present invention provides an electronic device including the electrochemical device as described above.

The present invention has the following beneficial effects.

The present invention provides a positive electrode sheet, an electrochemical device including the positive electrode sheet, and an electronic device. The structural stability of the positive electrode active material at high temperature and the cycling performance of the positive electrode sheet are significantly improved by controlling the content of trace elements in the positive electrode active material in the positive electrode sheet, the half-peak breadth of the diffraction peak at a diffraction angle $2\theta$ of about 36.6° in a XRD spectrum, and the full width at half maximum of the particle size volume distribution, so that an internal resistance growth rate and a capacity retention rate of the electrochemical device containing the positive electrode sheet after cycling under high voltage and high temperature conditions are improved.

## BRIEF DESCRIPTION OF THE DRAWINGS

For a better understanding of the invention, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate corresponding parts throughout the several views. For a better understanding of the invention, reference may be made to exemplary embodiments shown in the following drawings. The components in the drawings are not necessarily to scale and related elements may be omitted, or in some instances proportions may have been exaggerated.

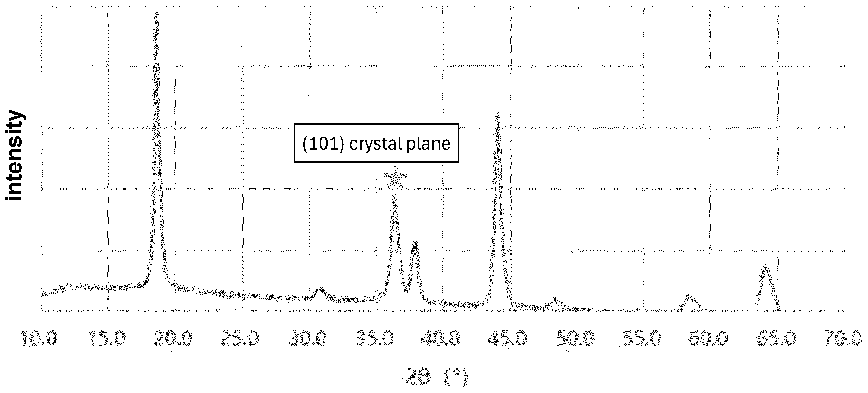

FIG. 1 is a typical view showing a XRD spectrum of a positive electrode active material of the present invention.

## DESCRIPTION OF THE EMBODIMENTS

In order to make the objectives, technical solutions, and advantages of examples of the invention clearer, the technical solutions in the examples of the invention will be described clearly and completely below. Obviously, the described examples are part of the invention, rather than all of the examples. Based on the examples in the invention, all other examples obtained by a person skilled in the art without involving any inventive effort are within the scope of protection of the invention.

In the present invention, among the technical features which are described in an open manner, it includes a closed technical solution consisting of the recited features as well as an open technical solution containing the recited features.

In the present invention, reference is made to numerical ranges which are, unless otherwise indicated, to be considered continuous and to include both the minimum and maximum values of the range, and every value between the minimum and maximum values. Further, when a range refers to an integer, every integer between the minimum and maximum values of the range is included. Further, when multiple ranges are provided to describe a feature or characteristic, the ranges can be combined. In other words, unless otherwise indicated, all ranges disclosed herein are to be understood to include any and all subranges subsumed therein.

In the present invention, the specific dispersion and stirring treatment methods are not particularly limited.

Where the reagents or instruments used in the invention are not specified by the manufacturer, they are conventional products commercially available.

It should be noted that, in the content of the present application, the present application is explained by using a lithium ion secondary battery as an example of an electrochemical device, but the electrochemical device of the present application is not limited to the lithium ion secondary battery.

Positive electrode sheet

An example of the present invention provides a positive electrode sheet including a positive electrode current collector and a positive electrode active material layer provided on at least one surface of the positive electrode current collector, the positive electrode active material layer includes a positive electrode active material, the positive electrode active material includes a ternary positive electrode material containing trace elements, and the trace elements are boron, zirconium and aluminum elements.

The positive electrode sheet satisfies an equation of:

$$11.0 \leq [F_{101} + (D_{FW}/4.5)] \times 1.85 + \ln(M) \leq 17.0;$$

in the equation, the $F_{101}$ is a half-peak breadth, in the unit of ° (namely, in the unit of degree), of a diffraction peak at a position where a diffraction angle $2\theta$ is $36.6 \pm 1°$ in an XRD spectrum of the positive electrode active material;
$D_{FW}$ is a full width at half maximum, in the unit of $\mu$m, of particle size volume distribution of the positive electrode active material; and
M is a total mass proportion, in the unit of ppm, of the trace elements in the positive electrode active material.

In the present invention, by controlling the content of trace elements in the positive electrode active material in the positive electrode sheet, the half-peak breadth of the diffraction peak at a position where the diffraction angle $2\theta$ is about 36.6° in the XRD spectrum and the full width at half maximum of the particle size volume distribution, the above-mentioned parameters are comprehensively adjusted so as to satisfy an equation of: $11.0 \leq [F_{101} + (D_{FW}/4.5)] \times 1.85 + \ln(M) \leq 17.0$, and thereby significantly improving the stability and cycling performance of positive electrode sheet under high temperature and high pressure.

In the XRD pattern of the positive electrode active material, a diffraction peak at a diffraction angle $2\theta$ of $36.6 \pm 1°$ represents a characteristic diffraction peak of a (101) crystal plane of the positive electrode active material. In the R-3m point group structure of the ternary positive electrode material, the crystal lattice is formed by stacking a plurality of layered metal oxide layers, and the (101) crystal plane refers to a specific crystal plane in the crystal. The Miller index thereof is (101). In a layered structure, a crystal may be considered to consist of a plurality of layers, each layer containing metal ions and oxygen atoms.

In the (101) crystal plane, the metal ions and oxygen atoms are arranged in a regular pattern to form a (101) crystal plane structure. Since the oxygen atoms are usually located at a central position in the layered structure, and the contribution to X-ray diffraction is relatively small, the diffraction peak intensity of the oxygen atoms is usually relatively weak. Metal ions (e.g., cobalt, nickel, manganese, etc.) contribute significantly to X-ray diffraction and their crystal planes typically exhibit diffraction peaks of moderate intensity. Specifically, the (101) crystal plane of the layered structure may exhibit an alternating arrangement of metal ions and oxygen atoms, or an arrangement of metal ions in a chain-like or honeycomb-like structure with oxygen atoms filled therebetween.

In this study, it was found that the half-peak breadth ($F_{101}$) of the diffraction peak at diffraction angle $2\theta$ of $36.6 \pm 1°$ in the XRD pattern, i.e., the half-peak breadth of the diffraction peak at the (101) crystal plane, may reflect the crystal orientation, crystal structure and metal ion arrangement of the positive electrode active material.

From a crystal orientation perspective, a larger value for $F_{101}$ generally indicates a more complex crystal orientation. In general, the polycrystal usually has a larger half-peak breadth of the diffraction peak of the (101) crystal plane of the positive electrode active material than that of the single crystal. The smaller the crystal size, the larger the half-peak breadth. The crystal orientation can be used to evaluate the orientation uniformity and the degree of orientation of the positive electrode active material. The more complicated the crystal orientation indicates that the orientation uniformity and the degree of orientation are relatively low. For the positive electrode active material, after the orientation of the positive electrode active material is improved to a certain extent, the dynamic performance of the positive electrode active material, especially the high-voltage charge-discharge capacity, will be significantly improved, and the good interface stability will be maintained. However, too high orientation aggravates the interfacial side reaction at high temperature, which is not conducive to the high-temperature charge-discharge stability of ternary positive electrode materials. In view of the crystal structure, the higher the periodicity of the crystal structure of the positive electrode active material, the lower the degree of defects, and the smaller the value of $F_{101}$. It was found that a certain degree of unit cell defects or asymmetry is beneficial to the structural stability and rate of deinserting lithium of the positive electrode active material, and contributes to the charge-discharge performance of the battery. Especially after cycling at high pressure, the capacity retention rate is high. However, the structural stability of the positive electrode active material matrix will be rapidly destroyed due to excessive defects and excessive accumulation of defects, resulting in structural collapse during the charge and discharge, serious deterioration of structural stability, and excessive increase of internal resistance after high temperature cycling. In view of the arrangement of the metal ions, a smaller half-peak breadth of the diffraction peak of the (101) crystal plane, i.e., a smaller value of $F_{101}$, generally indicates that the metal atoms in the layer of the positive electrode active material have a better order and periodicity, and the mutual stacking between layers is also regular, which contributes to the improvement of the stability of the battery, in particular, a lower internal resistance growth rate. Therefore, the value of $F_{101}$ should be within the appropriate range and should not be too large or too small.

$D_{FW}$ is the full width at half maximum of the particle size volume distribution of the positive electrode active material, that is, the difference between the two particle size values corresponding to half the maximum height of the interval particle size distribution curve of the positive electrode active material. The interval particle size distribution (also referred to as differential distribution of particle size) curve of the positive electrode active material is a well-known meaning in the art, and is defined as a curve drawn with the particle size as the abscissa and the volume percentage content as the ordinate, which can more accurately reflect the particle size distribution characteristics of the positive electrode active material particles. If the $D_{FW}$ is small, it means that the particle size distribution is relatively concentrated. If the $D_{FW}$ is larger, the particle size distribution is broader.

At high temperature, the volume change of the positive electrode active material may occur due to thermal expansion after cycling of the battery. If the $D_{FW}$ of the positive electrode active material is too small, i.e., the particle size distribution is very concentrated, the volume change of all particles may be too uniform, resulting in stress concentration of the entire positive electrode active material. Such stress concentrations may lead to structural failure of the material, reducing the stability of the positive electrode sheet. Furthermore, the particle size is too uniform, which is not conducive to pore filling in the process of electrode sheet compaction, and there is a risk of local overpressure, resulting in the hindrance of lithium ion migration in the positive electrode active material. Therefore, the positive electrode active material should have a moderate $D_{FW}$, and the $D_{FW}$ should not be too small.

Also, $D_{FW}$ should not be too large, too large full width at half maximum of the particle size means that the distribution range of particle size is wide, which may lead to too large capacity difference between single particles, leading to uneven capacity of the positive electrode sheet in the process of high-voltage charging and discharging, thereby accelerating the capacity attenuation of battery and reducing the cycle performance of battery. In addition, the $D_{FW}$ of the positive electrode active material is too large, which means that there are some very large or very small particles. The large particle is inert in interfaces, and lithium ions inside the particles are difficult to migrate. The larger particle size difference will lead to the increased non-uniformity of the charging and discharging process of the positive electrode sheet, leading to local accelerated failure, such as excessive increase of internal resistance.

In this study, it is found that $F_{101}$ and $D_{FW}$ may comprehensively evaluate the morphology characteristics of positive electrode active materials on crystal and particle scales for the positive electrode sheet containing the positive electrode active materials. Considering the different degrees of influence of the characteristics of at the crystal and the particle levels on the high-temperature stability and cycle performance of the battery, a comprehensive definition and regulation are made in the above-mentioned relation of "$F_{101}+(D_{FW}/4.5)$".

M is the total mass proportion of boron (B), zirconium (Zr) and aluminum (Al) in the positive electrode active material. The content of B, Zr and Al has a certain effect on the bulk crystal structure and interfacial stability of positive electrode active materials. The positive electrode active material contains appropriate amount of B, Zr and Al, which helps to enhance the migration speed of lithium ions in the positive electrode material, inhibit the failure of bulk crystal structure and interface structure caused by lithium ion deinsertion, eliminate the local stress generated in the battery cycle and enhance the high-temperature stability. However, excessive content of trace elements may cause excessive lattice defects in the positive electrode active material, locally destroy the ordering of the layered structure of the positive electrode active material, or hinder the inserting and deinserting of ions, resulting in degradation behaviors of the positive electrode active material, such as abnormally low capacity and high impedance.

Considering that the half-peak breadth of the diffraction peak of the (101) crystal plane is related to the crystal structure of the positive electrode active material and the arrangement of the metal ions, the content of trace elements also affects the crystal lattice of the positive electrode active material. The content of B, Zr and Al, especially Zr and Al as metal elements, and their variations and distribution, have a certain impact on the value of $F_{101}$.

Therefore, by controlling the contents of B, Zr and Al, and further combining $F_{101}$ with $D_{FW}$, the present invention rationally controls the trace element content and the crystal and particle characteristics of the positive electrode sheet, thereby improving the stability and cycling performance of the lithium ion battery at high temperature.

Exemplarily, in the present invention, the value of $[F_{101}+(D_{FW}/4.5)]\times 1.85+\ln(M)$ may be 11.0, 11.5, 12.0, 14.0, 16.0, 16.5 and 17.0, or an interval range of any two of the values.

In one of the embodiments, the positive electrode sheet satisfies an equation of $13.0\leq[F_{101}+(D_{FW}/4.5)]\times 1.85+\ln(M)\leq 16.0$.

In one of the embodiments, the range of $F_{101}$ is from 0.2° to 1.6°, e.g., 0.2°, 0.25°, 0.3°, 0.5°, 0.8°, 1.0°, 1.2°, 1.3°, 1.4°, 1.45°, 1.5° and 1.6°.

In an alternative embodiment, the range of $F_{101}$ is from 0.8° to 1.35°.

In the above-mentioned alternative range of $F_{101}$, the positive electrode active material has an appropriate crystal size, crystal structure, and arrangement of metal ions, contributing to improvement of stability and cycle performance of the battery at high temperature.

With regard to the method for detecting $F_{101}$, the present invention is not limited, and a person skilled in the art would be able to use an X-ray diffraction (XRD) test to detect the half-peak breadth of the diffraction peak of the (101) crystal plane of the positive electrode active material, where the XRD test conditions may include a method known in the art.

For $F_{101}$, it may be controlled by changing the content of trace elements, adjusting the content and distribution of cobalt, nickel and manganese in the positive electrode active material, or adjusting the preparation process of the positive electrode active material.

In one of the embodiments, the range of $D_{FW}$ is from 4 μm to 15 μm, e.g., 4 μm, 5 μm, 6 μm, 8 μm, 10 μm, 12 μm, 13 μm, 14 μm and 15 μm.

In one of the embodiments, the range of $D_{FW}$ is from 8 μm to 13 μm.

When the $D_{FW}$ is within the above-mentioned range of the present invention, the positive electrode active material has a suitable particle size distribution range and a suitable particle gradation, which helps to ensure the uniformity of the positive electrode sheet reaction during the charge and discharge of the battery, thereby reducing local excessive deinserting lithium and interfacial side reactions, improving the charge and discharge performance of the battery, and improving the cycle stability and structural stability.

With regard to the method for detecting the $D_{FW}$, it is not limited in the present invention. A person skilled in the art would be able to detect the $D_{FW}$ of the positive electrode active material according to conventional technical means. By way of example, a laser particle size analyzer, such as a Master sizer 3000 laser particle size analyzer of Malvern Instruments Ltd. in the United Kingdom, may be used.

The regulation of the DFW of the positive electrode active material generally uses a grading and screening method. The specific grading and screening method is not particularly limited and can be selected according to actual situations. Generally, grading and screening are conducted using mesh sieves. The positive electrode active material is typically sieved through sieves of different mesh sizes. Due to different particle sizes, particles with a small particle size are screened out by the sieves, while particles of the desired particle size are retained on the sieves, thereby obtaining positive electrode active materials with different particle size grades. Active substances of certain particle size dimensions can be formulated according to actual needs so that their particle size distribution can be adjusted manually.

In one of the embodiments, the range of M is from 2,500 ppm to 7,000ppm, e.g., 2,500 ppm, 2,700 ppm, 3,000 ppm, 3,500 ppm, 4,000 ppm, 5,000 ppm, 6,000 ppm, 6,500 ppm, 6,800 ppm, and 7,000 ppm.

In an alternative embodiment, the range of M is from 2,800 to 5,000 ppm.

With regard to the method for detecting M, it is not limited in the present invention. A person skilled in the art may detect the content of B, Zr and Al of positive electrode active materials according to conventional technical means. Illustratively, the detection may be by the ICP test.

As for B, Zr and Al, on the one hand, it may be carried in by the raw materials for preparing the positive electrode active material. On the other hand, it may be introduced by adding a boron source, a zirconium source, or an aluminum source in the preparation of the positive electrode active material.

Optionally, the boron source includes boron oxide and/or boric acid. The zirconium source includes at least one of zirconium hydroxide, zirconium nitrate, zirconium sulfate, zirconium oxide, zirconium phosphate, zirconium chloride. The aluminum source includes at least one of aluminum hydroxide, aluminum oxide, aluminum nitrate, aluminum acetate, aluminum sulphate, sodium aluminate, and potassium aluminate.

In one of the embodiments, the contents of B, Al and Zr in the trace elements satisfy an equation of $-20\leq(3\times M_B+1.3\times M_{Zr}-2\times M_{Al})/100\leq 30$;
in the equation, $M_B$, $M_{Zr}$ and $M_{Al}$ are respectively the mass proportions of B, Zr and Al in the positive electrode active material, in the unit of ppm.

A certain amount ofB helps to increase the electrical conductivity and ion diffusion rate of the material and improve the charge and discharge performance of the battery. B also forms a B-O bond with oxygen (O) in the material with a higher bond energy and a stronger stability, which can improve the reversibility of the crystal phase transition and the stability of the crystal structure to a certain extent. Also, B is more likely to form a dense coating layer uniformly distributed on the surface of the material so as to isolate the physical contact between the positive electrode material and the electrolyte solution, thereby improving the internal resistance growth rate of the battery at a high temperature. Due to the larger ionic radius of Zr, a certain amount of Zr in the positive electrode active material can expand the lithium ion diffusion channel, thereby improving the reversible discharge capacity of the material and slowing down the capacity decay rate of the positive electrode active material at high temperature. Al has a smaller ionic radius (generally smaller than a Co ion and a Ni ion). Aluminum ions can form a bond with surrounding oxygen ions more tightly. By controlling the content of Al, the bonding force between bonds in the positive electrode active material may be enhanced to improve the stability of the material at high temperature and high voltage. However, when the amounts of B, Zr and Al are excessive, impurities may be generated. In particular, the content of Al may have a great effect on the order of the crystal structure and may also destroy the layered structure of the matrix material.

This study has found that in the present application, when the contents of B, Zr and Al are further controlled to satisfy an equation of $-20 \leq (3 \times M_B + 1.3 \times M_{Zr} - 2 \times M_{Al})/100 \leq 30$, B, Zr and Al are in the appropriate range, and the internal resistance growth rate is lower and the capacity retention rate is higher after cycling at high temperature and high pressure.

Exemplarily, in the present invention, the value of $(3 \times M_B + 1.3 \times M_{Zr} - 2 \times M_{Al})/100$ may be -20, -18, -15, -10, -5, 0, 5, 10, 15, 20, 25, 28, 30, or an interval range of any two of the above values.

In an alternative embodiment, the contents of B, Al and Zr in the trace elements satisfy an equation of $-8 \leq (3 \times M_B + 1.3 \times M_{Zr} - 2 \times M_{Al})/100 \leq 15$.

In one of the embodiments, the mass proportion of the B in the positive electrode active material is 300-1,000 ppm.

In an alternative embodiment, the mass proportion of the B in the positive electrode active material is 500-900 ppm.

In one of the embodiments, the mass proportion of the Zr in the positive electrode active material is 1,000-3,000 ppm.

In an alternative embodiment, the mass proportion of the Zr in the positive electrode active material is 1,100-1,800 ppm.

In one of the embodiments, the mass proportion of the Al in the positive electrode active material is 1,000-4,000 ppm.

In an alternative embodiment, the mass proportion of the Al in the positive electrode active material is 1,200-2,500 ppm.

In one of the embodiments, the ternary positive electrode material has the formula of $LiNi_xCo_yMn_{(1-x-y)}O_2$, where $0.7 \leq x < 1, 0 < y \leq 0.3$, and $0 < x+y < 1$.

In the present invention, the preparation method of $LiNi_xCo_yMn_{(1-x-y)}O_2$ is not limited. A person skilled in the art would be able to prepare a positive electrode active material according to conventional technical means. Exemplarily, the positive electrode active material precursor and the lithium source are mixed and subjected to a sintering treatment to obtain a positive electrode active material. Among them, the sintering treatment may include multiple sintering, for example, including a primary sintering and a secondary sintering. The step of cooling, ball milling, etc. may also be included between the primary sintering and the secondary sintering.

The positive electrode active material precursor may be one or more of oxides, hydroxides and carbonates containing Ni, Co and Mn in a stoichiometric ratio, for example, hydroxides containing Ni, Co and Mn in the stoichiometric ratio. The positive electrode active material precursor may be obtained by a method known in the art, for example, by a coprecipitation method, a gel method, or a solid phase method.

As an example, a Ni source, a Co source and a Mn source are dispersed in a solvent to obtain a mixed solution. The mixed solution, the strong base solution and the complexing agent solution are pumped simultaneously into a stirred reaction kettle by means of a continuous-flow reaction, with the pH value of the reaction solution controlled to be 10-13, and the temperature in the reaction kettle to be 25-90°C. The mixture is protected by an inert gas during the reaction. After completion of the reaction, aging, filtration, washing and vacuum drying is performed to give hydroxide containing Ni, Co and Mn.

In some examples of the invention, the Ni source includes at least one of nickel sulfate, nickel nitrate, nickel chloride, nickel oxalate, or nickel acetate; and/or the Co source includes at least one of cobalt sulfate, cobalt nitrate, cobalt chloride, cobalt oxalate, or cobalt acetate; and/or the Mn source includes at least one of manganese sulfate, manganese nitrate, manganese chloride, manganese oxalate or manganese acetate; and/or the Li source includes at least one of lithium oxide ($Li_2O$), lithium phosphate ($Li_3PO_4$), lithium dihydrogen phosphate ($LiH_2PO_4$), lithium acetate ($CH_3COOLi$), lithium hydroxide (LiOH), lithium carbonate ($Li_2CO_3$), or lithium nitrate ($LiNO_3$).

The positive electrode active material precursor and the lithium source may be mixed using a ball mill mixer or a high speed mixer. The mixed material is introduced into an atmospheric sintering furnace for sintering. The sintering atmosphere is an oxygen-containing atmosphere, such as an air atmosphere or an oxygen atmosphere.

In addition, the positive electrode active material may also be subjected to a coating process. Specifically, a coating material is coated on the surface of the positive electrode active material by dry coating (high temperature solid phase method). The surface of the positive electrode active material is partially or fully coated with a coating layer formed by the coating material.

In addition to the positive electrode active material, the positive electrode active material layer may also contain a conductive agent and a binder.

The conductive agent is used to provide electrical conductivity in the electrode. Any conductive agent may be used without particular limitation as long as it has suitable electronic conductivity without causing adverse chemical changes in the battery, including, preferably, carbon fibers such as carbon nanofibers, carbon black such as acetylene black and Ketjen black, and carbon materials such as activated carbon, graphite, mesoporous carbon, fullerenes, and carbon nanotubes.

The binder improves adhesion between positive electrode active material particles and adhesion between the positive electrode active material and the current collector. Thus, suitable binders for use in embodiments are fluorine-containing polyolefin-based binders that may include, but are not limited to, PVDF, vinylidene fluoride copolymers or modified (e.g., modified by carboxylic acid, acrylic acid, acrylonitrile, etc.) derivatives thereof, and the like.

In the present invention, the positive electrode current collector is not particularly limited as long as it has electrical conductivity without causing adverse chemical changes in the battery, including, for example, stainless steel, aluminum, nickel, titanium, fired carbon; or aluminum or stainless steel that has been surface treated with one of carbon, nickel, titanium, silver, etc.

In the present invention, the positive electrode sheet may be prepared according to conventional methods in the art. For example, a positive electrode active material, a conductive agent and a binder are dispersed in a solvent. The solvent may be N-methylpyrrolidone (NMP) or deionized water to form a uniform positive electrode slurry. The positive electrode slurry is coated on a positive electrode current collector. After drying, rolling and the like, a positive electrode sheet is obtained.

Electrochemical device

In accordance with an example of the present invention, an electrochemical device is provided, including the positive electrode sheet as described above, the negative electrode sheet and the electrolyte solution.

The negative electrode sheet of the present invention includes a negative electrode current collector and a negative electrode active material layer provided on at least one surface of the negative electrode current collector. The negative electrode active material includes a negative electrode active material and may also include conductive agents and/or binders.

The negative electrode current collector is not particularly limited in the present invention as long as it has high conductivity without causing adverse chemical changes in the battery. For example, copper, stainless steel, aluminum, nickel, titanium, fired carbon, copper or stainless steel surface-treated with one of carbon, nickel, titanium, silver, or the like, or an aluminum-cadmium alloy may be used.

As for the negative electrode active material, the examples of the present invention do not specifically limit the kind of the negative electrode active material, and may be selected according to practical requirements. By way of example, the negative electrode active material may be one or more of natural graphite, artificial graphite, mesophase carbon microspheres (MCMB), hard carbon, soft carbon, silicon, silicon-carbon composite, SiOm ($0<m<2$, such as m=1), Li-Sn alloy, Li-Sn-O alloy, Sn, SnO, $SnO_2$, spinel-structured lithium titanate $Li_4Ti_5O_{12}$, Li-Al alloy, and metallic lithium.

Examples of the present invention do not specifically limit the kinds of the conductive agent and the binder in the negative electrode active material layer, and may be selected according to practical requirements. By way of example, the conductive agent is one or more of graphite, superconducting carbon, acetylene black, carbon black, ketjen black, carbon dots, carbon nanotubes, graphene, and carbon nanofibers. The binder is one or more of styrene-butadiene rubber, polyvinylidene fluoride, polytetrafluoro ethylene, polyvinyl butyral, aqueous acrylic resin, and carboxymethyl cellulose. The negative active material layer may also optionally include a thickener such as carboxymethyl cellulose.

The electrolyte solution of the present invention may be any electrolyte solution suitable in the art for use in electrochemical energy storage devices. The electrolyte solution includes an electrolyte and a solvent. The electrolyte solution may generally include a lithium salt.

Specifically, the lithium salt includes at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bistrifluoromethosulfonimide (LiTFSI), lithium triflate (LiTFS), lithium difluorooxalate borate (LiDFOB), lithium dioxalate borate (LiBOB), lithium difluorophosphate ($LiPO_2F_2$), lithium difluorooxalate phosphate (LiDFOP), and lithium tetrafluorooxalate phosphate (LiTFOP). The concentration of the electrolyte in the electrolyte solution may be 0.5-5 mol/L.

Specifically, the solvent includes at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1, 4-butyrolactone (GBL), sulfolane (SF), dimethyl sulfone (MSM), methyl ethyl sulfone (EMS), and diethyl sulfone (ESE). The solvent may be present in an amount of 70 to 98% by weight based on the weight of the electrolyte solution.

In addition, additives may be included in the electrolyte solution. Specifically, the additive may include a negative electrode membrane-forming additive, a positive electrode membrane-forming additive, and may further include an additive capable of improving certain properties of the battery, for example, an additive for improving overcharge properties of the battery, an additive for improving high-temperature properties of the battery or an additive for improving low-temperature properties of the battery, etc.

The electrochemical device may further include a separator positioned between the positive electrode sheet and the negative electrode sheet for spacing the positive electrode sheet and the negative electrode sheet and preventing the positive electrode sheet and the negative electrode sheet from contacting and short-circuiting. The separator may be any materials known in the art suitable for use as a separator for electrochemical energy storage devices. Specifically, the separator includes at least one of polyethylene, polypropylene, polyvinylidene fluoride, aramid, polyethylene terephthalate, polytetrafluoro ethylene, polyacrylonitrile, polyimide, polyamide, polyester, and natural fiber.

Electronic device

Examples of the present invention provide an electronic device including the electrochemical device described above. The electrochemical device serves as a power supply for the electronic device.

The electronic device refers to any apparatus that may use electrical energy and convert it into one or more of mechanical energy, thermal energy, light energy, etc., such as an electric motor, an electric heat engine, an electric light source, etc. Specifically, the electronic device may include, but is not limited to, a mobile device, an electric vehicle, an electric train, a ship and a satellite, an energy storage system, etc. The mobile device may be a mobile phone, a notebook computer, an unmanned aerial vehicle, a sweeping robot, an electronic cigarette, etc. The electric vehicle may be a pure electric vehicle, a hybrid electric vehicle, a plug-in hybrid electric vehicle, an electric bicycle, an electric scooter, an electric golf cart, an electric truck, or the like.

The invention is further illustrated by the following specific examples.

Example 1

This Example 1 provides a lithium ion battery, and the specific preparation method is as follows.

(1) Preparation of positive electrode sheet

(1.1) according to the molar ratio of each element of Li, Ni, Co and Mn in the chemical formula of $LiNi_{0.91}Co_{0.02}Mn_{0.07}O_2$, nickel sulfate, cobalt sulfate, manganese sulfate and lithium hydroxide were respectively weighed. The lithium hydroxide was slightly in excess. Specifically, the ratio of the molar amount of lithium hydroxide to the total molar amount of nickel sulfate, cobalt sulfate and manganese sulfate (Li/Me) was 1.05 : 1.

(1.2) Nickel sulfate, cobalt sulfate and manganese sulfate were respectively dissolved in deionized water. Each metal solution was transferred to a reaction kettle through a pipeline to form a mixed metal solution, with nitrogen introduced as a protective gas. An aqueous NaOH solution was added as a precipitant and ammonia added as a complexing agent into the mixed metal solution. The ammonia concentration was adjusted by stages to control the pH of the solution to 10-13. The temperature of the reaction kettle was controlled to be 50-55°C, reacting for 10 hours, to obtain a ternary precursor after aging, filtering, washing and vacuum drying.

(1.3) Lithium hydroxide and a ternary precursor with a boron source (boron oxide), a zirconium source (zirconium hydroxide) and an aluminum source (aluminum oxide) were mixed. The addition amount of the boron source, zirconium source or aluminum source was adjusted so that $M_B$, $M_{Zr}$ and $M_{Al}$ met the requirements shown in Table 2. The mixture was subjected to primary sintering. The sintering atmosphere was an oxygen-containing atmosphere with an $O_2$ concentration of 90%. The temperature and time of the primary sintering are shown in table 1. After cooling, the sintered product was placed in a ball milling device for ball milling. The temperature, time and rotation speed of the ball milling are shown in table 1. The ball-milled product was then subjected to secondary sintering in an oxygen-containing atmosphere with an O2 concentration of 90%. See Table 1 for the temperature and time of secondary sintering.

(1.4) The sintered material after the secondary sintering was subject to grinding, crushing and sieving to obtain a ternary positive electrode active material of which $D_{FW}$ satisfied Table 2.

(1.5) The positive electrode active material, a binder (polyvinylidene fluoride) and a conductive agent (carbon black) were mixed in a mass ratio of 97:1:2. The mixture was added with N-methylpyrrolidone (NMP), and stirred under the action of a vacuum stirrer until the mixed system was formed into a positive electrode slurry with uniform fluidity. The positive electrode slurry was uniformly coated on the positive electrode current collector (aluminum foil). The positive electrode current collector coated with the positive electrode slurry was transferred to an oven for drying, and then rolled and cut to obtain a positive electrode sheet.

(2) Preparation of negative electrode sheet

(1.2) A negative electrode active material (artificial graphite), a conductive agent (acetylene black), a thickener (carboxymethyl cellulose, CMC) and a binder (styrene-butadiene rubber, SBR) were mixed in a mass ratio of 97 : 12 : 1 : 1. A negative electrode slurry was prepared in a wet process by using a vacuum stirrer. The negative electrode slurry was uniformly coated on a negative electrode current collector (copper foil). The negative electrode current collector coated with the negative electrode slurry was transferred into an oven for drying, and then rolled and cut to obtain a negative electrode sheet.

(3) Preparation of electrolyte solution

Ethylene carbonate (EC), ethyl methyl carbonate (EMC) and diethyl carbonate (DEC) were mixed in a volume ratio of 20 : 20 : 60 to obtain an organic solvent, and then sufficiently dried lithium salt $LiPF_6$ was dissolved in the mixed organic solvent to prepare an electrolyte solution with a concentration of 1 mol/L.

(4) Preparation of separator

A 12 $\mu$m thick polypropylene separation film was used.

(5) Preparation of battery

The prepared positive electrode sheet, separator and negative electrode sheet were wound to obtain a bare electric core without liquid injection. The bare electric core was placed in an outer packaging foil. The above-mentioned prepared electrolyte solution was injected into the dried bare electric core. The same was subjected to vacuum packaging, standing, formation, shaping, sorting and other processes to obtain a lithium ion battery.

Examples 2-18, and Comparative examples 1-5

Examples 2-18 and Comparative examples 1-5 respectively provide a lithium ion battery, the preparation method of which is similar to that of Example 1, except that when preparing a positive electrode sheet, the addition amount of a boron source, a zirconium source or an aluminum source was adjusted so that $M_B$, $M_{Zr}$ and $M_{Al}$ met the requirements shown in Table 2. The temperature and time of primary sintering, the temperature, time and rotation speed of ball milling (it should be noted that in Examples 4 and 12, the step of ball milling was not performed, i.e., after the primary sintered product was cooled, the secondary sintering is directly performed), and the temperature and time of secondary sintering are shown in Table 1. After the secondary sintering, the material was ground, crushed, and sieved for the $D_{FW}$ to meet the requirements shown in Table 2.

Table 1

|  | Primary sintering | | Ball milling | | | Secondary sintering | |
| --- | --- | --- | --- | --- | --- | --- | --- |
|  | Temperatur e (°C) | Time (hour) | Temperatur e (°C) | Time (hour) | Rotationa l speed (rpm) | Temperatur e (°C) | Time (hour) |
| Example 1 | 830 | 8 | 25 | 0.75 | 25 | 450 | 4 |
| Example 2 | 850 | 9 | 25 | 1 | 30 | 500 | 4 |
| Example 3 | 800 | 7 | 30 | 1 | 40 | 450 | 6 |
| Example 4 | 870 | 8 | / | / | / | 430 | 4 |
| Example 5 | 850 | 8 | 25 | 0.75 | 40 | 450 | 3 |
| Example 6 | 780 | 7.5 | 35 | 2 | 35 | 450 | 4 |
| Example 7 | 800 | 8 | 45 | 0.5 | 25 | 470 | 3 |
| Example 8 | 810 | 7.5 | 25 | 0.5 | 45 | 460 | 5 |
| Example 9 | 880 | 7.5 | 45 | 0.75 | 40 | 420 | 3 |

(continued)

| | Primary sintering | | Ball milling | | | Secondary sintering | |
|---|---|---|---|---|---|---|---|
| | Temperatur e (°C) | Time (hour) | Temperatur e (°C) | Time (hour) | Rotationa l speed (rpm) | Temperatur e (°C) | Time (hour) |
| Example 10 | 750 | 9 | 30 | 0.5 | 30 | 430 | 5 |
| Example 11 | 900 | 9 | 45 | 1 | 40 | 450 | 5 |
| Example 12 | 920 | 9 | / | / | / | 400 | 4 |
| Example 13 | 750 | 8.5 | 40 | 0.75 | 30 | 460 | 5 |
| Example 14 | 860 | 8.5 | 45 | 1.25 | 35 | 425 | 5 |
| Example 15 | 815 | 7 | 25 | 0.3 | 50 | 470 | 4 |
| Example 16 | 710 | 8 | 45 | 2 | 40 | 400 | 3 |
| Example 17 | 910 | 9 | 40 | 1.75 | 35 | 400 | 4 |
| Example 18 | 880 | 10 | 45 | 1.75 | 30 | 430 | 5 |
| Comparativ e Example 1 | 950 | 10 | 40 | 2 | 35 | 430 | 5 |
| Comparativ e Example 2 | 730 | 7.5 | 25 | 0.5 | 30 | 425 | 3.5 |
| Comparativ e Example 3 | 845 | 9 | 35 | 1.25 | 30 | 455 | 5 |
| Comparativ e Example 4 | 755 | 8 | 30 | 1 | 35 | 410 | 3.5 |
| Comparativ e Example 5 | 915 | 8 | 30 | 1.25 | 30 | 410 | 3.5 |

For each Example and Comparative Example, the trace element content (i.e., the value of M, including $M_B$, $M_{Zr}$ and $M_{Al}$) of the positive electrode sheet, the $D_{FW}$ and $F_{101}$ of the positive electrode active material were tested, and the above-mentioned test methods were as follows.

M: The lithium ion battery was disassembled to obtain a positive electrode sheet. The positive electrode sheet was soaked in dimethyl carbonate ( DMC ) at room temperature for 60 minutes. The positive electrode sheet was taken out and dried at room temperature with a humidity of ≤ 15%. The positive electrode active material layer on the surface of the current collector was scraped off to perform calcination at 500°C for 3 hours, so as to remove the conductive agent, binder, surface side reaction products and residual electrolyte solution, and obtain the positive electrode active material after washing and drying. 2 g of the positive electrode active material was taken for ICP detection by a ICP test instrument (ICAP 7400) to obtain the mass contents of B, Zr and Al in the positive electrode active material, respectively recorded as $M_B$, $M_{Zr}$ and $M_{Al}$, M= $M_B$+$M_{Zr}$+$M_{Al}$, in the unit of ppm.

DFW: The lithium ion battery was disassembled to obtain a positive electrode sheet. The positive electrode sheet was soaked in DMC at room temperature for 60 minutes. The positive electrode sheet was taken out and dried at room temperature with a humidity of ≤ 15%. The positive electrode active material layer on the surface of the current collector was scraped off to perform calcination at 500°C for 3 hours, so as to remove the conductive agent, binder, surface side reaction products and residual electrolyte solution, and obtain the positive electrode active material after washing and drying. The positive electrode active material was dispersed in an aqueous solution containing 3% sodium hexametaphosphate dispersant. The resultant was continuously stirred with a glass rod for 10 cycles. Then, the sample was quickly poured into a sample pool of a particle size distribution instrument (Master sizer 3000 laser particle size analyzer manufactured by Malvern Instruments Ltd. UK) for testing, so as to obtain $D_{FW}$, in the unit of $\mu$m.

F101: The lithium ion battery was disassembled to obtain a positive electrode sheet. The positive electrode sheet was soaked in DMC at room temperature for 60 minutes. The positive electrode sheet was taken out and dried at room temperature with a humidity of ≤ 15%. The positive electrode active material layer on the surface of the current collector was scraped off to perform calcination at 500°C for 3 hours, so as to remove the conductive agent, binder, surface side reaction products and residual electrolyte solution, and obtain the positive electrode active material after washing and drying. 2 g of positive electrode active material was taken for an XRD test by X-ray diffraction equipment (Rigku Ultima IV-type X-ray diffractometer of Rigaku). The specific test conditions were as follows: Cu target, scan voltage 40 KV, current 40 mA, scan range 10-90°, and scan rate 10 °/min. XRD was calibrated by silicon internal standard method. The diffraction peak at the position where the diffraction angle $2\theta$ was $36.6 \pm 1°$ in the XRD diagram was the (101) crystal plane diffraction peak, and the half-peak breadth of this diffraction peak was $F_{101}$, in the unit of °.

In each of Examples and Comparative Examples, M (including $M_B$, $M_{Zr}$ and $M_{Al}$), and $D_{FW}$, $F_{101}$ test results of the positive electrode active material were shown in Table 2. The XRD spectrum of the positive electrode active material of Example 1 was shown in FIG. 1, which was a typical graph of the XRD spectrum of the positive electrode active material of the present invention.

Table 2

| | $F_{101}$ (°) | $D_{FW}$ (μm) | M (ppm) | $M_B$ (ppm) | $M_{Zr}$ (ppm) | $M_{Al}$ (ppm) |
|---|---|---|---|---|---|---|
| Example 1 | 1.22 | 12.6 | 3520 | 784 | 1205 | 1531 |
| Example 2 | 1.03 | 10.5 | 4214 | 336 | 1827 | 2051 |
| Example 3 | 1.11 | 10.5 | 4204 | 307 | 1511 | 2386 |
| Example 4 | 0.89 | 10.3 | 4195 | 905 | 2069 | 1221 |
| Example 5 | 1.08 | 10.6 | 4222 | 781 | 1785 | 1656 |
| Example 6 | 1.35 | 8.1 | 4841 | 792 | 1586 | 2463 |
| Example 7 | 0.82 | 11.6 | 2806 | 410 | 1189 | 1207 |
| Example 8 | 1.15 | 12.8 | 4942 | 815 | 2068 | 2059 |
| Example 9 | 0.93 | 8.5 | 2917 | 459 | 1138 | 1320 |
| Example 10 | 1.4 | 10.3 | 2659 | 311 | 1053 | 1295 |
| Example 11 | 0.68 | 7.2 | 6867 | 852 | 2726 | 3289 |
| Example 12 | 0.31 | 14.5 | 4963 | 521 | 2114 | 2328 |
| Example 13 | 1.35 | 12.9 | 4984 | 713 | 1839 | 2432 |
| Example 14 | 0.81 | 8.0 | 2804 | 405 | 1220 | 1179 |
| Example 15 | 1.13 | 14.6 | 6935 | 817 | 2905 | 3213 |
| Example 16 | 1.58 | 4.1 | 2561 | 351 | 1180 | 1030 |
| Example 17 | 0.23 | 6.8 | 2913 | 537 | 1150 | 1226 |
| Example 18 | 0.42 | 6.7 | 3003 | 885 | 1092 | 1026 |
| Comparative Example 1 | 0.22 | 4.3 | 2945 | 330 | 1082 | 1533 |
| Comparative Example 2 | 1.60 | 15.2 | 7069 | 1059 | 3120 | 2890 |
| Comparative Example 3 | 0.92 | 9.6 | 5939 | 0 | 2830 | 3109 |
| Comparative Example 4 | 1.46 | 11.9 | 3447 | 696 | 0 | 2751 |
| Comparative Example 5 | 0.57 | 7.5 | 3167 | 527 | 2640 | 0 |

The lithium ion batteries prepared in Examples and Comparative Examples were subjected to performance tests according to the following projects and methods.

(1) Internal resistance growth rate:

After conventional formation to a constant volume, the prepared lithium ion battery was charged to 4.5 V at a constant current of 0.33C at 45°C, and then charged to a current of $\leq 0.05C$ at a constant voltage and cut off to obtain a capacity $Q_0$. After standing for 5 minutes, it was discharged by 0.5 $Q_0$ electric quantity (namely, 50% SOC) at 0.33C, leaving 10 minutes, with the voltage recorded as V1. Then it was discharged at 1C for 18 seconds, with the voltage recorded as V2, then (V1-V2)/1C, so as to obtain the internal resistance $DCR_1$ of the cycling initial lithium ion battery. The above steps were repeated for the same lithium ion battery, with the internal resistance $DCR_{200}$ of lithium ion battery recorded after the 200th cycle. The internal resistance growth rate of lithium ion battery = $(DCR_{200}-DCR_1)/DCR_1 \times 100\%$, in the unit of %.

(2) Capacity retention rate:

S1. The lithium ion battery was placed in a 25°C environment, standing until the lithium ion battery reaches a constant temperature, charged to 4.4 V at a constant current of 0.33C and then discharged to 2.8 V at 25°C, standing for 60 minutes.

S2. Then the lithium ion battery was placed in an environment, standing at 65°C until the lithium ion battery reached a constant temperature, charged to 4.5 V at a constant current of 0.33C and charged to a current of $\leq 0.05C$ at a constant voltage, and after standing for 5 minutes, discharged to 2.8 V at 0.33C, this capacity being taken as an initial capacity $C_1$.

S3. The step S2 was repeated for 200 cycles and the capacity of 200 cycles was recorded as $C_{200}$. The capacity retention rate was calculated by the capacity retention rate = $C_{200}/C_1 \times 100\%$.

According to Table 2, the calculation results of $[F_{101}+(D_{FW}/4.5)]\times 1.85 + \ln(M)$ and $(3\times M_B + 1.3\times M_{Zr} - 2\times M_{Al})/100$, and the performance test results of lithium ion battery were shown in Table 3 below.

Table 3

| | $[F_{101}+(D_{FW}/4.5)]\times 1.85 + \ln(M)$ | $(3\times M_B+1.3\times M_{Zr}-2\times M_{Al})/100$ | Internal resistance growth rate | Capacity retention rate |
|---|---|---|---|---|
| Example 1 | 15.60 | 8.57 | 31.50% | 92.70% |
| Example 2 | 14.57 | -7.19 | 33.60% | 92.50% |
| Example 3 | 14.71 | -18.87 | 38.40% | 91.20% |
| Example 4 | 14.22 | 29.63 | 37.50% | 91.10% |
| Example 5 | 14.70 | 13.52 | 35.10% | 93.10% |
| Example 6 | 14.31 | -4.88 | 31.80% | 92.90% |
| Example 7 | 14.23 | 3.62 | 32.40% | 93.50% |
| Example 8 | 15.90 | 10.15 | 33.30% | 92.80% |
| Example 9 | 13.19 | 2.16 | 34.50% | 91.80% |
| Example 10 | 14.71 | -2.88 | 40.20% | 90.20% |
| Example 11 | 13.05 | -4.78 | 41.10% | 89.80% |
| Example 12 | 15.04 | -3.45 | 42.60% | 90.50% |
| Example 13 | 16.31 | -3.34 | 48.60% | 87.70% |
| Example 14 | 12.73 | 4.43 | 46.20% | 88.30% |
| Example 15 | 16.94 | -1.99 | 49.60% | 86.60% |
| Example 16 | 12.46 | 5.27 | 52.90% | 85.50% |
| Example 17 | 11.20 | 6.54 | 50.80% | 86.10% |
| Example 18 | 11.54 | 20.23 | 51.40% | 85.30% |
| Comparativ e Example 1 | 10.16 | -6.69 | 70.80% | 77.00% |
| Comparativ e Example 2 | 18.07 | 14.53 | 75.30% | 78.30% |
| Comparativ e Example 3 | 14.34 | -25.39 | 65.40% | 79.60% |
| Comparativ e Example 4 | 15.74 | -34.14 | 67.20% | 78.70% |
| Comparativ e Example 5 | 12.20 | 50.13 | 66.00% | 79.90% |

With regard to the lithium ion battery prepared in each of the embodiments of the present invention, under high-temperature and high-voltage conditions, after 200 cycles, the internal resistance growth rate was $\leq 53\%$, and the capacity retention rate was $\geq 85\%$. It can be seen that the stability of the lithium ion battery containing the positive electrode sheet of the present invention under high-temperature and high-voltage conditions is significantly improved, the internal resistance growth rate of the lithium ion battery is low, and the capacity retention rate is high.

From Examples 2 to 5, it can be seen that when the contents of the boron element, the zirconium element and the aluminum element satisfy $-20 \leq (3 \times M_B + 1.3 \times M_{Zr} - 2 \times M_{Al})/100 \leq 30$, the capacity retention rate and the internal resistance growth rate of the lithium ion battery are relatively superior.

As can be seen from Comparative Examples 1 to 5, when the value of the positive electrode sheet $[F_{101}{}^+(D_{FW}/4.5)] \times 1.85 + \ln(M)$ is out of the range defined in the present invention, or no boron, zirconium or aluminum is contained in the positive electrode active material, the internal resistance growth rate and the capacity retention rate of the lithium ion battery after cycling under high voltage and high temperature are poor.

**Claims**

1. A positive electrode sheet comprising a positive electrode current collector and a positive electrode active material layer provided on at least one surface of the positive electrode current collector, **characterized in that** the positive electrode active material layer includes a positive electrode active material, the positive electrode active material includes a ternary positive electrode material containing trace elements; the trace elements are boron, zirconium and aluminum;

   the positive electrode sheet satisfies an equation of:

   $11.0 \leq [F_{101}{}^+(D_{FW}/4.5)] \times 1.85 + \ln(M) \leq 17.0$;
   in the equation, the $F_{101}$ is a half-peak breadth, in the unit of °, of a diffraction peak at a position where a diffraction angle $2\theta$ is $36.6 \pm 1°$ in an XRD spectrum of the positive electrode active material;
   $D_{FW}$ is a full width at half maximum, in the unit of $\mu m$, of particle size volume distribution of the positive electrode active material; and
   M is a total mass proportion, in the unit of ppm, of the trace elements in the positive electrode active material.

2. The positive electrode sheet according to claim 1, **characterized in that** the positive electrode sheet satisfies an equation of $13.0 \leq [F_{101}{}^+(D_{FW}/4.5)] \times 1.85 + \ln(M) \leq 16.0$.

3. The positive electrode sheet according to claim 1, **characterized in that** a range of $F_{101}$ is from 0.2° to 1.6°.

4. The positive electrode sheet according to claim 3, **characterized in that** a range of $F_{101}$ is from 0.8° to 1.35°.

5. The positive electrode sheet according to claim 1, **characterized in that** a range of $D_{FW}$ is from 4 $\mu m$ to 15 $\mu m$.

6. The positive electrode sheet according to claim 5, **characterized in that** a range of $D_{FW}$ is from 8 $\mu m$ to 13 $\mu m$.

7. The positive electrode sheet according to claim 1, **characterized in that** a range of M is from 2,500 ppm to 7,000 ppm.

8. The positive electrode sheet according to claim 7, **characterized in that** a range of M is from 2,800 ppm to 5,000 ppm.

9. The positive electrode sheet according to claim 7, **characterized in that** contents of B, Al and Zr in the trace elements satisfy an equation of $-20 \leq (3 \times M_B + 1.3 \times M_{Zr} - 2 \times M_{Al})/100 \leq 30$;
   in the equation, $M_B$, $M_{Zr}$ and $M_{Al}$ are mass proportions, in the unit of ppm, of boron, zirconium and aluminum in the positive electrode active material, respectively.

10. The positive electrode sheet according to claim 9, **characterized in that** the content of B, Al and Zr in the trace elements satisfies an equation of $-8 \leq (3 \times M_B + 1.3 \times M_{Zr} - 2 \times M_{Al})/100 \leq 15$.

11. The positive electrode sheet according to claim 9, **characterized by** comprising at least one of the features described in (a) to (c) below:

    (a) the mass proportion of the boron in the positive electrode active material is 300-1,000 ppm;
    (b) the mass proportion of the zirconium in the positive electrode active material is 1,000-3,000 ppm; and
    (c) the mass proportion of the aluminum in the positive electrode active material is 1,000-4,000 ppm.

12. The positive electrode sheet according to claim 1, **characterized in that** the ternary positive electrode material has a formula of $LiNi_xCo_yMn_{(1-x-y)}O_2$, where $0.7 \leq x < 1$, $0 < y \leq 0.3$, and $0 < x+y < 1$.

13. An electrochemical device, **characterized by** comprising the positive electrode sheet according to any one of claims 1 to 12.

**14.** An electronic device, **characterized by** comprising the electrochemical device according to claim 13.